# EUROPEAN PATENT SPECIFICATION

(11) **EP 3 498 578 B1**
(45) Date of publication and mention of the grant of the patent: **09.09.2020**
(21) Application number: 18211952.9
(22) Date of filing: 12.12.2018
(51) Int. Cl.: B62D 43/04

(54) **TRAILER SPARE TIRE-HOLDER CONSTRUCT**
ANHÄNGERERSATZREIFENHALTERUNGSKONSTRUKTION
CONSTRUCTION DE PORTE-PNEU DE RECHANGE DE REMORQUE

(30) Priority: 15.12.2017 TR 201720541
(43) Date of publication of application: 19.06.2019
(73) Proprietor: Tirsan Treyler Sanayi Ve Ticaret Anonim Sirketi, 54010 Arifiye/Sakarya (TR)
(72) Inventor: BAYRAM, Aykut, Sakarya (TR); SOYTÜRK, Asli, Sakarya (TR)
(74) Representative: Yamankaradeniz, Kemal

(56) References cited:
- DE-A1- 4 330 387
- DE-C- 912 664
- US-A- 3 369 683
- US-A- 4 948 169
- US-A- 5 238 358
- US-A- 6 053 690

## Description

### Technical Field

The invention is related to the spare tire-holder on vehicles enabling the spare tire to be removed from the place it is stored.

The innovation is mainly related to a spare tire-holder which enables the user to remove it easily without having to enter under the vehicle in trailer and semi-trailer type vehicles.

### The Current Status of the Technique

Presently, there is a spare tire-holder in every vehicle. Accidents occur due to road and weather conditions. Some of these accidents arise from tires. As a result of these accidents problems like torn tires etc. arise. In present applications, especially in taxi's accessing the spare tire is easy through the trunk. However, in large vehicles, the spare tire-holder is generally located under the vehicle. This placement causes some inconveniences. The most important being the user has to lay down underneath the vehicle.

In known applications, there are three types of tire-holders. These tire holders are generally bolted to the rear section (the tail section) of the vehicle, in between the main supporting structures. During the tire change, the user has to enter underneath the vehicle and remove the fasteners to access the tire located in the tire holder. The process requires the user to lay on the ground on his/her back sometimes in harsh weather conditions. This situation is inconvenient both concerning safety and concerning ease of use. Moreover, the approximate weight of a tire is 70 kg. This weight is also ergonomically unfavorable for the user.

Especially removing the tire from the holder and placing it back is ergonomically straining for the user.

Consequently, the problems described above and the inadequacy of the present solutions necessitate developments in the related technical field. US 4 948 169 discloses the features of the preamble of claim 1.

### The purpose of the invention

The innovation in question is related to a spare tire-holder construct eliminating the above-stated disadvantages and bringing advantages to the associated technical field.

The primary purpose of the spare tire-construct, subject of the invention, is to enable the user to access the spare tire without having to enter underneath the vehicle, and with less effort.

Another purpose of the invention is to consume less energy by utilizing the pneumatic control mechanism and the crank.

Another purpose of the invention is to prevent accidents by enabling access to the spare tire without having to lay down underneath the vehicle.

Another purpose of the invention is to create an ergonomic and user-friendly design.

The invention consists of the following structural items to enable the user to access the spare tire without entering underneath the vehicle:
- The crank providing the first rotating movement
- The drive
- This invention is a spare tire-holder construct featuring a pneumatic control mechanism to control the air going into the drive in question, and its parts are
- The bottom plate which is the supporting frame on which the spare tire is placed
- The superposition bracket enabling it to travel on the bottom plate
- The linking profile to which the superposition bracket and the drive are connected
- The ball bearing enabling the bottom plate to travel by rolling on the superposition bracket in question
- The roller mechanism enabling the spare tire-holder construct to slide out and in from underneath the vehicle
- The roller shaft which transmits the momentum from the crank to the roller mechanism.
- The rope enabling the back and forth movement of the spare tire by coiling onto the roller mechanism

The structural and characteristic features and all the advantages of the invention would become lucid with the following figures and the detailed explanations referring to them. Therefore, the assessment must be made by considering these figures and detailed explanations

### Figures to Help in Understanding the Invention

Figure 1. The overview of the spare tire-holder construct which is the subject of the invention
Figure 2. The close-up view of the spare tire-holder construct which is the subject of the invention
Figure 3. The simulation view of the functioning method of the spare tire-holder construct which is the subject of the invention

### Description of Part References

1. spare tire-holder construct
10. Spare tire
20. bottom plate
21. plate wheel
30. superposition bracket
40. Ball bearing
50. Linking profile
51. The drive
60. Roller shaft
70. Roller mechanism
80. crank
90. pneumatic control mechanism
100. Chassis
110. bolt
120. rope

### The detailed description of the invention

In this detailed description, the preferred alternative constructs of the spare tire-holder (1) are explained only to help the comprehensibility of the subject and in a way not to create a restrictive effect

The invention is a construct of spare-tire holder providing the user with access to the spare tire without having to enter underneath the vehicle, and involving a crank (80) delivering the first rotating movement, the drive (51), the control mechanism (90) controlling the air that goes into the drive (51) in question. The specialness of the invention is that it involves a bottom plate (20) being the supporting frame on which the spare tire (10) is placed, a superposition bracket (30) enabling it to travel on the bottom plate (20), a linking profile (50) to which the superposition bracket (30) in question and the drive are connected, and a ball bearing enabling the bottom plate to travel by rolling on the superposition bracket in question. Along with those, a roller mechanism (70) enabling the spare tire-holder construct (1) in question to slide out and in from underneath the vehicle, a roller shaft (90) transmitting the momentum from the crank (80) to the roller mechanism (60), and a rope (120) enabling the back and forth movement of the spare tire by coiling onto the roller mechanism.

The spare tire mechanism involves a bolt (110) fastening the spare tire-holder construct to the chassis (100) when the vehicle is moving. In addition to that, it involves at least one plate wheel - placed on the corners of the bottom plate - enabling the spare tire construct to travel on the ground. Moreover, the drive referred in the spare tire-holder construct is a piston.

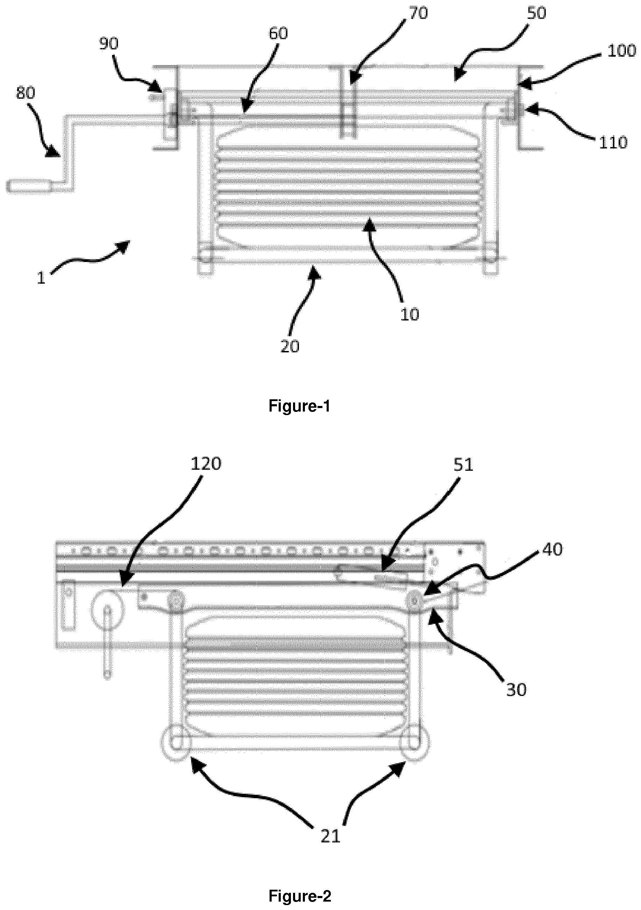

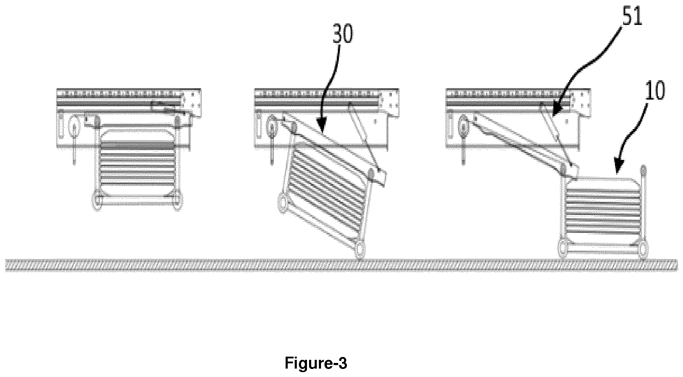

Figure 1 gives an overview of the spare tire-holder construct. The user's ergonomic access with ease to the spare tire (10) without laying down underneath the vehicle occurs as described below: The bolts are removed to bring out the bottom plate (20) which holds the spare tire (10). The drive (piston) (51) is operated to incline the superposition brackets (30) Using the pneumatic control mechanism. The roller shaft (60) is rotated using the crank (80). The roller shaft (60) in question rotates the roller mechanism (70). The bottom plate (20) starts to descend with the uncoiling rope (120) from the roller mechanism (70) as seen in figure 3. Roller mechanism (70) is rotated with the aid of the crank (80) until the wheels (21) of the bottom plate (20) touches the ground. When the bottom plate (20) is at a position permitting it to roll on the bottom plate wheels (21), the spare tire may be removed from the bottom plate. After the tire change, the spare tire (10) is placed in the bottom plate (20) and fastened to it. With the aid of the crank (80) the bottom plate (20) is rolled in the ball bearings (40) are placed in the superposition brackets (30). Using the rolling mechanism (70) coiling is accomplished. When the plate wheels (21) are off the ground, the drive is shut off using the pneumatic control mechanism (90). The bottom plate (20) is fastened on the load-bearing chassis (100) column by using the bolts (110).

## Claims

1. A spare tire-holder construct beneath a vehicle, comprising;
• A drive (51) that eases loading and unloading of a spare-tire,
• A pneumatic control mechanism (90) to control the air going into the drive (51),
• A bottom plate (20) which is the supporting frame on which the spare tire (10) is placed,
• A superposition bracket (30) on which the bottom plate (20) can travel,
• A linking profile (50) to which the superposition bracket (30) and the drive (51) are connected,
• A ball bearing enabling (40) the bottom plate to travel by rolling on said superposition bracket (30),
• A roller mechanism (70) enabling the spare tire-holder construct (1) to slide out and in from beneath the vehicle said construct
**characterized by further comprising;**
• A crank providing a first rotating movement (80),
• A roller shaft (60) which transmits the momentum from the crank (80) to the roller mechanism,
• A rope (120) enabling the back and forth movement of the spare tire (10) by coiling onto the roller mechanism (70).

2. A spare tire-holder (1) according to Claim 1, **characterized in** comprising a bolt that enables to fasten the mentioned spare tire-holder construct (1) to the chassis (100) when the vehicle is moving.

3. A spare tire-holder (1) according to Claim 1, **characterized in** comprising at least one plate wheel (21) located at the corners of the bottom plate (20), and that enable(s) the mentioned spare tire-holder construct to travel on the ground.

4. A spare tire-holder (1) according to Claim 1, **characterized by** the mentioned drive (51) is a piston.

## Patentansprüche

1. Reserveradhalterkonstrukt unter einem Fahrzeug, umfassend:
• einen Antrieb (51), der das Be- und Entladen eines Reserverads erleichtert,
• einen pneumatischen Steuermechanismus (90) zum Steuern der in den Antrieb (51) einströmenden Luft,
• eine Bodenplatte (20), bei der es sich um den Stützrahmen handelt, auf dem das Reserverad (10) platziert ist,
• eine Überlagerungshalterung (30), auf der sich die Bodenplatte (20) bewegen kann,
• ein Verbindungsprofil (50), mit dem die Überlagerungshalterung (30) und der Antrieb (51) verbunden sind,
• ein Kugellager (40), das es der Bodenplatte ermöglicht, sich durch Rollen auf der Überlagerungshalterung (30) zu bewegen,
• einen Rollenmechanismus (70), der es dem Reserveradhalterkonstrukt (1) ermöglicht, unter dem Fahrzeug heraus und hinein zu gleiten, wobei das Konstrukt **dadurch gekennzeichnet ist, dass es ferner Folgendes umfasst:**
• eine Kurbel, die eine erste Drehbewegung (80) bereitstellt,
• eine Rollenwelle (60), die den Impuls von der Kurbel (80) auf den Rollenmechanismus überträgt,
• ein Seil (120), das die Hin- und Herbewegung des Reserverads (10) durch Aufwickeln auf den Rollenmechanismus (70) ermöglicht.

2. Reserveradhalter (1) nach Anspruch 1, **dadurch gekennzeichnet, dass** er einen Bolzen umfasst, der es ermöglicht, das genannte Reserveradhalterkonstrukt (1) an dem Fahrgestell (100) zu befestigen, wenn sich das Fahrzeug bewegt.

3. Reserveradhalter (1) nach Anspruch 1, der **dadurch gekennzeichnet ist, dass** er mindestens ein Plattenrad (21) umfasst, das sich an den Ecken der Bodenplatte (20) befindet, und das es dem genannten Reserveradhalterkonstrukt ermöglicht, sich auf dem Boden zu bewegen.

4. Reserveradhalter (1) nach Anspruch 1, **dadurch gekennzeichnet, dass** der genannte Antrieb (51) ein Kolben ist.

## Revendications

1. Structure de support de roue de secours sous un véhicule, comprenant :
• un entraînement (51) qui facilite le chargement et le déchargement d'une roue de secours,
• un mécanisme de commande pneumatique (90) pour commander l'air entrant dans l'entraînement (51),
• une plaque de fond (20) qui est le cadre d'appui sur lequel la roue de secours (10) est placée,
• un support de superposition (30) sur lequel la plaque de fond (20) peut se déplacer,
• un profil de liaison (50) auquel le support de superposition (30) et l'entraînement (51) sont raccordés,
• un roulement à billes permettant (40) à la plaque de fond de se déplacer en roulant sur ledit support de superposition (30),
• un mécanisme à rouleaux (70) permettant à la structure de support de roue de secours (1) de coulisser vers l'extérieur et vers l'intérieur depuis sous le véhicule, ladite structure étant **caractérisée en ce qu'elle comprend en outre :**
• une manivelle délivrant un premier mouvement de rotation (80),
• un arbre à rouleaux (60) qui transmet l'impulsion de la manivelle (80) au mécanisme à rouleaux,
• une corde (120) permettant le mouvement de va-et-vient de la roue de secours (10) en s'enroulant sur le mécanisme à rouleaux (70).

2. Support de roue de secours (1) selon la revendication 1, **caractérisé en ce qu'**il comprend un boulon qui permet de fixer la structure de support de roue de secours (1) mentionnée au châssis (100) lorsque le véhicule se déplace.

3. Support de roue de secours (1) selon la revendication 1, **caractérisé en ce qu'**il comprend au moins une roulette (21) située aux coins de la plaque de fond (20), et qui permet à la structure de support de roue de secours mentionnée de se déplacer au sol.

4. Support de roue de secours (1) selon la revendication 1, **caractérisé en ce que** l'entraînement mentionné (51) est un piston.
